# EUROPEAN PATENT SPECIFICATION

(11) **EP 4 410 517 B1**
(45) Date of publication and mention of the grant of the patent: **02.09.2026**
(21) Application number: 23839977.8
(22) Date of filing: 13.07.2023
(51) Int. Cl.: B29C 51/08, H01M 50/105, B29C 43/36, B29C 51/10, B29C 51/26, B29C 51/30, B29C 51/40, B21D 22/22, B21D 24/16

(54) **FORMING DEVICE FOR POUCH-TYPE SECONDARY BATTERY CASE AND FORMING METHOD USING SAME**
FORMVORRICHTUNG FÜR SEKUNDÄRBATTERIEGEHÄUSE VOM BEUTELTYP UND FORMVERFAHREN DAMIT
DISPOSITIF DE FORMATION POUR BOÎTIER DE BATTERIE SECONDAIRE DE TYPE POCHE ET MÉTHODE DE FORMATION L'UTILISANT

(30) Priority: 13.07.2022 KR 20220086154
(43) Date of publication of application: 07.08.2024
(73) Proprietor: LG Energy Solution, Ltd., Seoul 07335 (KR)
(72) Inventor: NAM, Hui Gyun, Daejeon 34122 (KR); SEO, Tai Joon, Daejeon 34122 (KR); PARK, Lae Seo, Daejeon 34122 (KR)
(74) Representative: Plasseraud IP
(86) International application number: PCT/KR2023/009988
(87) International publication number: WO 2024/014886

(56) References cited:
- JP-A- 2015 199 102
- KR-A- 20100 068 285
- KR-A- 20180 134 133
- KR-A- 20190 038 094
- KR-A- 20200 054 054
- KR-B1- 101 073 870

## Description

### [Technical Field]

This application claims the benefit of priority to Korean Patent Application No. 2022-0086154 filed on July 13, 2022.

The present invention relates to an apparatus for forming a pouch-shaped secondary battery case and a forming method using the same. More particularly, the present invention relates to an apparatus for forming a pouch-shaped secondary battery case capable of determining whether a pouch sheet is defective and preventing cracks from being formed in a receiving recess through processes of changing the movement direction of air using a punch having an air channel formed therein. The present invention also relates to a forming method using the same.

### [Background Art]

With the recent development of alternative energies, spurred by the use of fossil fuels which cause air pollution and energy depletion, demand for secondary batteries capable of storing electrical energy that is produced has increased. Secondary batteries, which are capable of being charged and discharged, are intimately used in daily life. For example, secondary batteries are used in mobile devices, electric vehicles, and hybrid electric vehicles.

Secondary batteries are classified into can-shaped battery cells, in which a cell assembly constituted by alternately stacked electrodes and separators is mounted in a metal can, and a pouch-shaped battery cells, in which a cell assembly constituted by alternately stacked electrodes and separators is mounted in a pouch. The pouch-shaped battery cell has attracted much attention and is increasingly being used due to low manufacturing cost, low weight, and easy deformation.

A pouch-shaped secondary battery is manufactured by forming a pouch sheet (also referred to as an "aluminum laminate sheet") to form a receiving recess therein, receiving a cell assembly in the receiving recess, and sealing the periphery of the receiving recess.

Meanwhile, cracks and pinholes may be formed during the manufacturing process of the pouch sheet, or various kinds of foreign matter, such as metal particles or dust, may be attached to the pouch sheet during a process of storing or transporting the pouch sheet.

If a pouch-shaped battery cell is manufactured using a sheet having cracks or pinholes formed therein or a sheet having foreign matter attached thereto, moisture or air may permeate the battery cell, or stability and quality of the battery cell may be significantly deteriorated due to the foreign matter.

In addition, a pouch sheet for secondary batteries is formed by pressing a punch into a die having a receiving portion formed therein and, at this time, there is a problem that cracks or wrinkles are formed in the receiving portion of the pouch sheet.

In connection therewith, Patent Document 1 (FIG. 1) discloses a technology for providing an air blowing portion 31 in an upper press 30, blowing air toward an upper surface of a pouch film 10 to bring a part of the pouch film 10 into tight contact with an inner surface of a forming recess 21, and coupling the air blowing portion 31 of the upper press 30 to the forming recess 21, thereby forming the pouch film 10. However, there is a shortcoming in that air must be blown at a considerably high pressure in order to bring the pouch film into tight contact with the forming recess through air blowing.

Furthermore, Patent Document 1 does not recognize problems due to defects or contamination of the pouch sheet at all. Another example which does not recognize problems due to defects or contamination of the pouch sheet can be found in Patent Document 2, related to a pouch forming method and a pouch forming device. Another example is described in Patent Document 3, which relates to a press-forming device and a press-forming method.

### (Prior Art Document)

(Patent Document 1) Korean Patent Application Publication No. 10-2018-0134133
(Patent Document 2) Korean Patent Application Publication No. 10-2020-0054054
(Patent Document 3) Japanese Patent Application Publication No. 2015-199102

### [Disclosure]

### [Technical Problem]

The present invention has been made in view of the above problems, and it is an object of the present invention to provide an apparatus for forming a pouch-shaped secondary battery case capable of forming a pouch sheet without blowing air at a high pressure and a forming method using the same.

It is another object of the present invention to provide an apparatus for forming a pouch-shaped secondary battery case capable of forming a pouch sheet while detecting defects, such as cracks or pinholes, in the pouch sheet and a forming method using the same.

It is a further object of the present invention to provide an apparatus for forming a pouch-shaped secondary battery case capable of minimizing formation of cracks in a receiving recess of a pouch sheet and improving precision of the formed receiving recess and a forming method using the same.

### [Technical Solution]

An apparatus for forming a pouch-shaped secondary battery case according to the present invention to accomplish the above objects is proposed according to claim 1.

Also, in the apparatus for forming the pouch-shaped secondary battery case according to the present invention, at least one of a pressure gauge or a flow meter may be provided in the air conduit (300).

Also, in the apparatus for forming the pouch-shaped secondary battery case according to the present invention, each of the first air conduit (310) and the second air conduit (320) may be provided with an opening and closing valve configured to control movement of air.

In addition, the present invention provides a method of forming a pouch sheet using the apparatus for forming the pouch-shaped secondary battery case, the method including a first step of seating a pouch sheet (S) on the die (100) having the forming recess (110) formed therein, a second step of fixing an edge of the pouch sheet (S), a third step of downwardly moving the punch (200) to a predetermined height from an upper surface of the pouch sheet (S) and reducing the pressure of the air channels (210) in the punch (200) to suction foreign matter from the pouch sheet (S) to remove the foreign matter, a fourth step of bringing the punch (200) into contact with the upper surface of the pouch sheet (S) and reducing the pressure of the air channels (210), and a fifth step of downwardly moving the punch (200) so as to come into tight contact with the inner surface of the forming recess (110) while maintaining a depressurized state of the air channels (210).

Also, in the method of forming the pouch sheet according to the present invention, in the third step, air may be blown through a first air channel (211) located in the vicinity of the edge of the punch (200) and the pressure of the second air channel (212) located inside the first air channel (211) may be reduced.

Also, in the method of forming the pouch sheet according to the present invention, the fourth step may further include maintaining a depressurized state for a predetermined period of time to determine a presence of cracks or pinholes in the pouch sheet (S).

Also, in the method of forming the pouch sheet according to the present invention, the presence of cracks or pinholes may be determined based on a change in pressure or a change in flow rate.

Also, the method of forming the pouch sheet according to the present invention may further include a sixth step of blowing air through the air channels (210) in a direction toward the forming recess (110) after the punch (200) comes into tight contact with the inner surface of the forming recess (110).

Also, in the method of forming the pouch sheet according to the present invention, in the sixth step, the pressure or flow rate of air blown through the first air channel (211), located in the vicinity of the edge of the punch (200), may be maintained so as to be higher than the pressure or flow rate of air blown through the second air channel (212), located inside the first air channel (211).

### [Advantageous Effects]

As is apparent from the above description, an apparatus for forming a pouch-shaped secondary battery case according to the present invention and a forming method using the same have an advantage in that a punch having an air channel formed therein and a pouch sheet are brought into tight contact with each other, a change in pressure or a change in flow rate is checked while a depressurized state is maintained for a predetermined period of time, whereby it is possible to determine whether cracks or pinholes are present in the pouch sheet. Accordingly, it is possible to improve process efficiency.

In addition, the apparatus for forming the pouch-shaped secondary battery case according to the present invention, and the forming method using the same, have merit in that the movement direction of air is controlled through the air channel provided in the punch, whereby it is possible to prevent formation of cracks during a forming process and furthermore to form a uniform receiving recess.

### [Description of Drawings]

FIG. 1 is a sectional view of a conventional forming apparatus.
FIG. 2 is a sectional view of an apparatus for forming a pouch-shaped secondary battery case according to a first example not belonging to the present invention.
FIG. 3 is a plan view of the forming apparatus taken along line A-A of FIG. 2.
FIG. 4 is a sectional view of an apparatus for forming a pouch-shaped secondary battery case according to a preferred embodiment of the present invention.
FIG. 5 is a sectional view of an apparatus for forming a pouch-shaped secondary battery case according to a further preferred embodiment of the present invention.
FIG. 6 is a flowchart illustrating a forming method using the forming apparatus according to the first example not belonging to the present invention.
FIG. 7 is a flowchart illustrating a forming method using the forming apparatus according to the further preferred embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail.

In addition, the same reference numbers will be used throughout the drawings to refer to parts that perform similar functions or operations. In the case in which one part is said to be connected to another part in the entire specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, an apparatus for forming a pouch-shaped secondary battery case according to the present invention and a forming method using the same will be described with reference to the accompanying drawings.

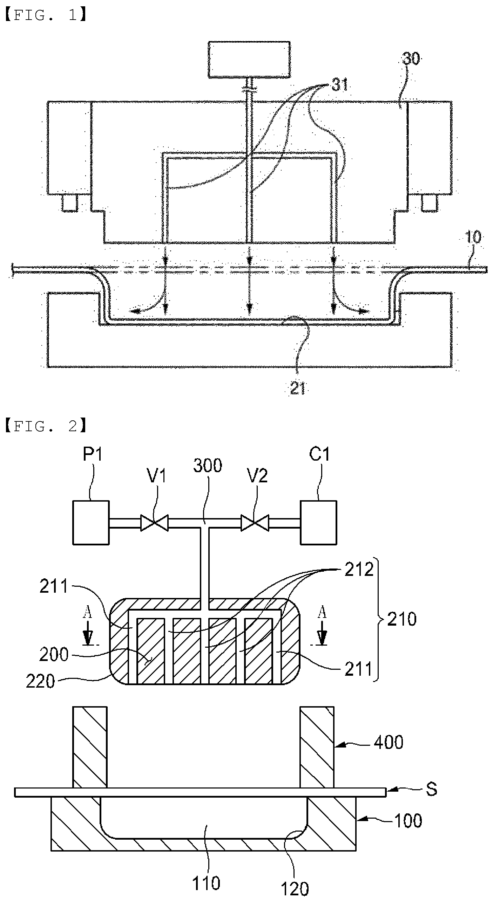

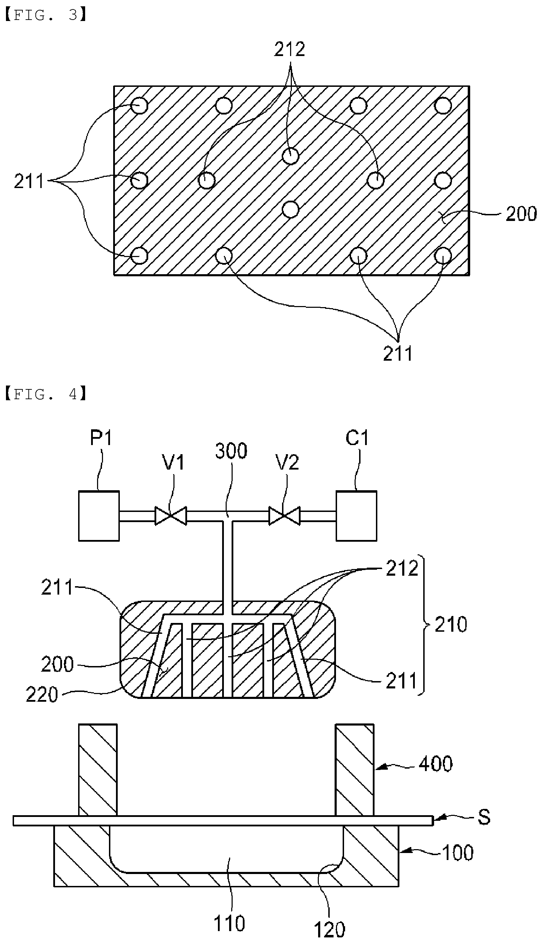

FIG. 2 is a sectional view of an apparatus for forming a pouch-shaped secondary battery case according to a first example not belonging to the present invention, and FIG. 3 is a plan view of the forming apparatus taken along line A-A of FIG. 2.

As shown in FIGs. 2 and 3, the forming apparatus according to the first example includes a die 100, a punch 200, an air conduit 300, and a pouch sheet fixing unit 400.

First, the die 100 is provided with a forming recess 110 formed in a shape corresponding to a receiving recess configured to receive an electrode assembly, and a die edge portion 120 having a predetermined radius of curvature is located along an edge at which a bottom surface and a vertical surface of the forming recess 110 join each other.

The punch 200, which is identical in outer shape to the forming recess 110, is operated to move upwards and downwards above the die 100. When a pouch sheet S is located between the die 100 and the punch 200, and the punch 200 is moved downwards, the punch comes into tight contact with an inner surface of the forming recess 110, whereby a receiving recess is formed in the pouch sheet S.

Meanwhile, the punch 200 is provided with a plurality of air channels 210. More specifically, the air channels 210 may include first air channels 211 and second air channels 212 located perpendicular to the bottom surface of the forming recess 110, wherein the first air channels 211 are located in the vicinity of an edge of the punch 200 while the second air channels 212 are located inside the first air channel 211.

The first air channels 211 and the second air channels 212 are paths through which air moves, and outside air introduced through the air conduit 300 may be blown toward the forming recess 110, or conversely air from below may be introduced and may then be discharged through the air conduit 300.

It is possible to remove foreign matter from the top of the pouch sheet S and to determine the presence of cracks or pinholes in the pouch sheet S by utilizing the first air channels 211 and the second air channels 212. Furthermore, it is ensured that a bottom surface, a side surface, and a bent portion of the receiving recess of the pouch sheet S are smooth flat or curved surfaces, which will be described in detail later.

Although the number of the first air channels 211 and the second air channels 212 are shown as being 10 and 4, respectively, the figure is only an example, and the number of the first air channels and the second air channels may be changed.

Next, the air conduit 300 will be described. As described above, the air conduit 300 is configured to supply air to the air channels 210, more specifically to the first air channels 211 and the second air channels 212, and to discharge the air suctioned into the first air channels 211 and the second air channels 212 to the outside.

Consequently, the air conduit 300 has one side connected to the punch 200 and the other side extending out of the punch 200 so as to communicate with the first air channels 211 and the second air channels 212.

Here, the air conduit 300 is formed so as to face in three directions, one of which is connected to the punch 200, and the other two are connected to a first pressure reducing pump P1 and a first compressor C1. In addition, a first valve V1 and a second valve V2, configured to control the flow direction of air, are provided in the vicinity of the first pressure reducing pump P1 and the first compressor C1, respectively. Furthermore, it is preferable for at least one of a flow meter (not shown) and a pressure gauge (not shown) to be further provided in the air conduit 300 in order to check the flow rate or the pressure of air passing through the air conduit 300.

For example, the flow meter, the pressure gauge, or the flow meter and the pressure gauge, may be installed between the first pressure reducing pump P1 and the first valve V1 and between the first compressor C1 and the second valve V2; however, the installation positions are not particularly restricted as long as it is possible to measure the flow rate or the pressure of air.

Meanwhile, the pressure reducing pump is configured to form negative pressure in the air channels, and the pressure reducing pump is not necessarily used. Any other means may be used as long as it is possible to perform the same function. In addition, the compressor is configured to supply air to the air channels, and the compressor is not necessarily used. Any other means may be used as long as it is possible to perform the same function.

The pouch sheet fixing unit 400 is configured to fix an edge of the pouch sheet S while moving upwards and downwards above the die 100. Although not shown in the figures, a lifting means may be further provided at the pouch sheet fixing unit 400.

FIG. 4 is a sectional view of an apparatus for forming a pouch-shaped secondary battery case according to a second example not belonging to the present invention. Referring to FIG. 4, this example is identical in construction to the first example except for the shape of air channels 210, and therefore only the different construction will be described.

In the forming apparatus according to the second example not belonging to the present invention, the air channels 210 are constituted by first air channels 211 and second air channels 212, which are inclined such that air can be directed to a die edge portion 120, whereby openings of the first air channels 211 are located in the vicinity of the die edge portion 120.

When air blown from the first air channels 211 is directed toward the die edge portion 120, as described above, it is possible to more easily form a bent portion of a pouch sheet S, which is relatively difficult to form, and to form the bent portion so as to have a smooth curved surface.

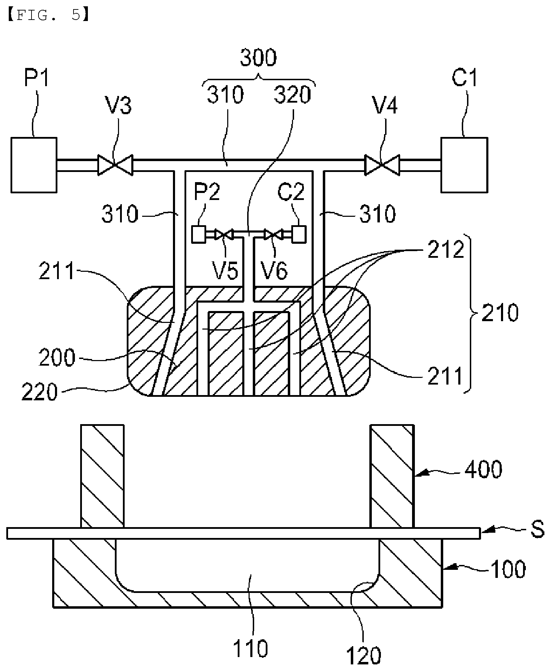

FIG. 5 is a sectional view of an apparatus for forming a pouch-shaped secondary battery case according to a preferred embodiment of the present invention.

Referring to FIG. 5, this embodiment is identical in construction to the first example except for the construction of air channels 210 and an air conduit 300, and therefore only the different construction will be described.

In the forming apparatus according to the preferred embodiment of the present invention, air channels 210 are constituted by first air channels 211 and second air channels 212, wherein the first air channels are inclined such that air can be directed to a die edge portion 120, as in the second embodiment, whereby openings of the first air channels 211 are located in the vicinity of the die edge portion 120.

Meanwhile, the air conduit 300 includes a first air conduit 310 connected to the first air channels 211 and a second air conduit 320 connected to the second air channels 212. The first air conduit 310 is provided with a first pressure reducing pump P1 and a first compressor C1, and the second air conduit 320 is provided with a second pressure reducing pump P2 and a second compressor C2, whereby it is possible to individually control the supply or discharge of air to or from the air conduits. Of course, a third valve V3 and a fourth valve V4 are mounted to the first air conduit 310, and a fifth valve V5 and a sixth valve V6 are mounted to the second air conduit 320.

Also, in order to individually check the flow rate or the pressure of air passing through the first air conduit 310 and the second air conduit 320, at least one of a flow meter (not shown) and a pressure gauge (not shown) is provided in each of the conduits, in the same manner as in the first embodiment.

When the first air conduit 310 and the second air conduit 320 are provided in a state of being separated from each other such that air can be supplied to or discharged from each of the first air channels 211 and the second air channels 212, as described above, it is possible to more easily remove foreign matter from a pouch sheet S, which will be described in more detail later.

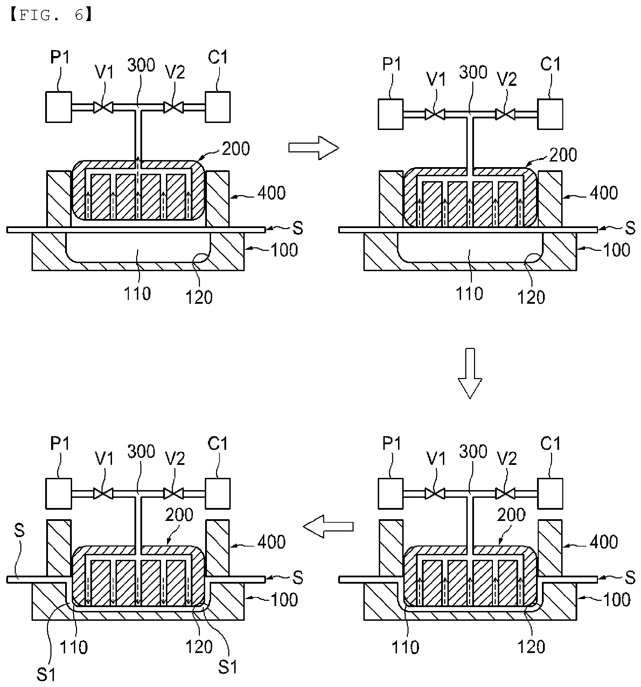

FIG. 6 is a flowchart illustrating a forming method using the forming apparatus according to the first example not belonging to the present invention.

The forming method using the forming apparatus according to the first example may include a first step of seating a pouch sheet S on the die 100 having the forming recess 110 formed therein, a second step of fixing an edge of the pouch sheet S, a third step of downwardly moving the punch 200 to a predetermined height from an upper surface of the seated pouch sheet S and reducing the pressure of the air channels in the punch 200 to suction foreign matter on the upper surface of the pouch sheet S such that the foreign matter is removed, a fourth step of bringing the punch 200 into contact with the upper surface of the pouch sheet S and reducing the pressure of the air channels, a fifth step of downwardly moving the punch 200 so as to come into tight contact with the inner surface of the forming recess 110 while maintaining the depressurized state of the air channels, and a sixth step of blowing air through the air channels in a direction toward the forming recess 110.

Specifically, the first step is a step of locating a pouch sheet S cut to a predetermined size on the die 100, and the second step is a step of downwardly moving the pouch sheet fixing unit 400 to securely press an edge of the pouch sheet S such that the edge of the pouch sheet is fixed in order to maintain the fixed state of the pouch sheet S even though the punch 200 moves to the forming recess 110.

Here, an inner vertical surface of the pouch sheet fixing unit 400 is preferably located on the same vertical extension line as a vertical wall surface forming the forming recess 110 of the die 100.

The third step is a step of removing various kinds of foreign matter settled on or attached to the pouch sheet S during a process of manufacturing or transporting the pouch sheet S. That is, the punch 200 is moved downwards such that the distance from the upper surface of the pouch sheet S is a few centimeters or less, preferably 2 centimeters or less, and air in the vicinity of the upper surface of the pouch sheet S is suctioned to remove the foreign matter. At this time, the first valve V1 of the air conduit 300 connected to the first pressure reducing pump P1 is open, whereas the second valve V2 of the air conduit 300 connected to the first compressor C1 is closed.

The fourth step is a step of determining the presence of cracks or pinholes formed during the process of manufacturing or transporting the pouch sheet S. Specifically, the punch 200 is moved downwards such that the upper surface of the pouch sheet S and the lower surface of the punch 200 come into tight contact with each other, the first valve V1 of the air conduit 300 connected to the first pressure reducing pump P1 is opened and the second valve V2 of the air conduit 300 connected to the first compressor C1 is closed.

At this time, when there are no cracks or pinholes in the pouch sheet S, the suction pressure or the air flow rate of the air conduit 300 connected to the first pressure reducing pump P1 does not change, but when there are cracks or pinholes, the suction pressure or the air flow rate changes, whereby it is possible to determine whether cracks or pinholes have been formed.

The fifth step is a step of bringing the punch 200 into tight contact with the inner surface of the forming recess 110 in order to form a receiving recess in the pouch sheet S. At this time, the second valve V2 of the air conduit 300 connected to the first compressor C1 is closed and the first valve V1 of the air conduit 300 connected to the first pressure reducing pump P1 is opened such that the pouch sheet S is shaped in a state of being in tight contact with the punch 200.

The sixth step is a step of blowing air in the direction toward the forming recess 110, which is a kind of forming finishing step. Although the receiving recess is formed in the pouch sheet S in the fifth step in which the outer surface of the punch 200 and the inner surface of the forming recess 110 come into tight contact with each other, a part of the receiving recess may not form a smooth surface. When the step of blowing air in the direction toward the forming recess 110 is performed, however, the surface of the receiving recess may be smoothly finished due to the pressure of the blown air.

Meanwhile, a forming method using the forming apparatus according to the second example not belonging to the present invention is identical to the forming method using the forming apparatus according to the first example. However, the forming apparatus according to the second example has an advantage in that the openings of the first air channels 211 are located in the vicinity of the die edge portion 120, and therefore, smooth finish can be achieved on the curved surface of the bent portion of the pouch sheet S, which is relatively difficult to form.

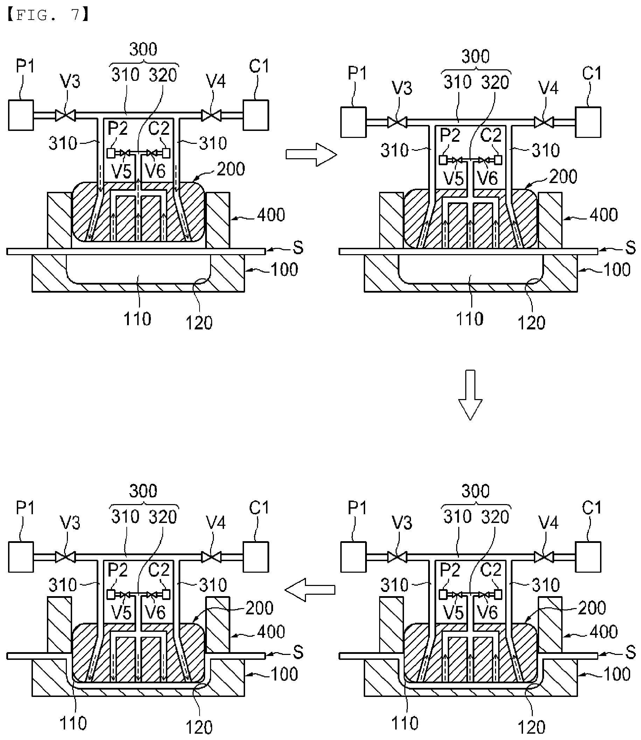

FIG. 7 is a flowchart illustrating a forming method using the forming apparatus according to the preferred embodiment of the present invention.

A first step of seating a pouch sheet S on the die 100 having the forming recess 110 formed therein and a second step of fixing an edge of the pouch sheet S are identical to the steps of the forming method according to the first example.

In a third step, however, the punch 200 is moved downwards to a predetermined height from an upper surface of the seated pouch sheet S, air is supplied to the first air channels 211 in the punch 200, and the pressure of the second air channels 212 is reduced to a negative pressure in order to suction foreign matter on the upper surface of the pouch sheet S such that the foreign matter can be removed.

That is, the fourth valve V4 of the first air conduit 310 connected to the first compressor C1 is open, but the third valve V3 is closed. In addition, the fifth valve V5 of the second air conduit 320 connected to the second pressure reducing pump P2 is open. Of course, the sixth valve V6 of the second air conduit 320 connected to the second compressor C2 is closed.

When the foreign matter on the pouch sheet S is far from the openings of the second air channels 212, it may be difficult to suction the foreign matter. Since air is blown through the first air channels 211 provided along the edge of the punch 200 and is suctioned through the second air channels 212, however, the foreign matter may be well suctioned into the second air channels 212.

A fourth step of bringing the punch 200 into contact with the upper surface of the pouch sheet S and reducing the pressure of the air channels 210, a fifth step of downwardly moving the punch 200 so as to come into tight contact with the inner surface of the forming recess 110 while maintaining the depressurized state of the air channels, and a sixth step of blowing air through the air channels 210 in a direction toward the forming recess 110 are substantially identical to the steps of the forming method according to the first example.

Since the forming apparatus according to the preferred embodiment is used, however, the first compressor C1 and the first pressure reducing pump P1 are used in order to supply air to the first air conduit 310 or to reduce the pressure of the first air conduit, and the second compressor C2 and the second pressure reducing pump P2 are used in order to supply air to the second air conduit 320 or to reduce the pressure of the second air conduit.

Meanwhile, air from the first compressor C1 and the second compressor C2, which are driven separately, is supplied to the first air conduit 310 and the second air conduit 320, respectively, and therefore it is easier to supply relatively high-pressure air toward the curved surface of the bent portion of the pouch sheet S, which is difficult to form.

The present invention has been described above with reference to specific embodiments. However, based on the above description, those skilled in the art to which the present invention pertains will appreciate that various applications and modifications are possible within the scope of the appended claims.

### (Description of Reference Symbols)

100: Die
110: Forming recess
120: Die edge portion
200: Punch
210: Air channel
211: First air channel
212: Second air channel
220: Punch edge portion
300: Air conduit
310: First air conduit
320: Second air conduit
400: Pouch sheet fixing unit
S: Pouch sheet
S1: Bent portion
P1: First pressure reducing pump
P2: Second pressure reducing pump
C1: First compressor
C2: Second compressor
V1: First valve
V2: Second valve
V3: Third valve
V4: Fourth valve
V3: Third valve
V4: Fourth valve

## Claims

1. An apparatus for forming a pouch-shaped secondary battery case, comprising:
a die (100) having a forming recess (110) formed therein and a die edge portion (120) having a predetermined radius of curvature, the die edge portion (120) being located along an edge at which a bottom surface and a vertical surface of the forming recess (110) join each other;
a punch (200) configured to be brought into tight contact with an inner surface of the forming recess (110) while moving upwards and downwards above the die (100); and
a pouch sheet fixing unit (400) configured to fix an edge of a pouch sheet (S) while moving upwards and downwards above the die (100);
**characterized in that** the punch (200) has a plurality of air channels (210) configured to selectively blow outside air in a direction toward the forming recess (110) and to suction air, wherein the air channels (210) comprise:
a first air channel (211) located in a vicinity of a punch edge portion (220) joining a bottom surface of the punch (200) facing the forming recess (110) and a vertical surface of the punch (200);
and a second air channel (212) located inside the punch (200) perpendicular to the bottom surface of the forming recess (110) and inwardly spaced in a radial direction from the first air channel (211), wherein the first air channel (211) is inclined so as to face the die edge portion (120) of the forming recess (110);
and **in that** the apparatus further comprises an air conduit (300) having one side connected to the air channels (210) and the other side extending out of the punch (200), wherein the air conduit (300) comprises:
a first air conduit (310) connected to the first air channel (211); and a second air conduit (320) connected to the second air channel (212).

2. The apparatus according to claim 1, wherein at least one of a pressure gauge or a flow meter is provided in the air conduit (300).

3. The apparatus according to claim 1, wherein each of the first air conduit (310) and the second air conduit (320) is provided with an opening and closing valve configured to control movement of air.

4. A method of forming a pouch sheet (S) using the apparatus according to any one of claims 1 to 3, the method comprising:
a first step of seating a pouch sheet (S) on the die (100) having the forming recess (110) formed therein;
a second step of fixing an edge of the pouch sheet (S);
the method being **characterized by** a third step of downwardly moving the punch (200) to a predetermined height from an upper surface of the pouch sheet (S) and reducing a pressure of the air channels (210) in the punch (200) to suction foreign matter from the pouch sheet (S) to remove the foreign matter;
a fourth step of bringing the punch (200) into contact with the upper surface of the pouch sheet (S) and reducing the pressure of the air channels (210); and
a fifth step of downwardly moving the punch (200) so as to come into tight contact with the inner surface of the forming recess (110) while maintaining a depressurized state of the air channels (210).

5. The method according to claim 4, wherein, in the third step, air is blown through the first air channel (211) located in the vicinity of the punch edge portion (220) and a pressure of the second air channel (212) is reduced.

6. The method according to claim 4, wherein the fourth step further comprises maintaining a depressurized state for a predetermined period of time to determine a presence of cracks or pinholes in the pouch sheet (S).

7. The method according to claim 6, wherein the presence of cracks or pinholes is determined based on a change in pressure or a change in flow rate.

8. The method according to claim 4, further comprising a sixth step of blowing air through the air channels (210) in a direction toward the forming recess (110) after the punch (200) comes into tight contact with the inner surface of the forming recess (110).

9. The method according to claim 8, wherein, in the sixth step, a pressure or flow rate of air blown through the first air channel (211) located in the vicinity of the edge of the punch (200) is maintained so as to be higher than a pressure or flow rate of air blown through the second air channel (212) located inside the punch (200) inwardly spaced from the first air channel (211).

## Patentansprüche

1. Vorrichtung zum Formen eines Sekundärbatteriegehäuses vom Beuteltyp, umfassend:
eine Matrize (100) mit einer darin ausgebildeten Formausnehmung (110) und einem Matrizenkantenabschnitt (120), der einen vorbestimmten Krümmungsradius aufweist, wobei der Matrizenkantenabschnitt (120) entlang einer Kante angeordnet ist, an der sich eine Bodenfläche und eine vertikale Fläche der Formausnehmung (110) miteinander verbinden;
einen Stempel (200), der so konfiguriert ist, dass er in engen Kontakt mit einer Innenfläche der Formausnehmung (110) gebracht werden kann, während er sich oberhalb der Matrize (100) nach oben und unten bewegt; und
eine Beutelfolien-Fixiereinheit (400), die so konfiguriert ist, dass sie eine Kante einer Beutelfolie (S) fixiert, während sie sich oberhalb der Matrize (100) nach oben und unten bewegt;
**dadurch gekennzeichnet, dass** der Stempel (200) eine Vielzahl von Luftkanälen (210) aufweist, die so konfiguriert sind, dass sie selektiv Außenluft in eine Richtung zur Formausnehmung (110) hin blasen und Luft ansaugen, wobei die Luftkanäle (210) umfassen:
einen ersten Luftkanal (211), der in der Nähe eines Stempelkantenabschnitts (220) angeordnet ist, der eine Bodenfläche des Stempels (200), die der Formausnehmung (110) zugewandt ist, und eine vertikale Fläche des Stempels (200) verbindet;
und einen zweiten Luftkanal (212), der innerhalb des Stempels (200) senkrecht zur Bodenfläche der Formausnehmung (110) und in radialer Richtung vom ersten Luftkanal (211) nach innen beabstandet angeordnet ist, wobei der erste Luftkanal (211) so geneigt ist, dass er dem Matrizenkantenabschnitt (120) der Formausnehmung (110) zugewandt ist;
und dadurch, dass die Vorrichtung ferner eine Luftleitung (300) umfasst, deren eine Seite mit den Luftkanälen (210) verbunden ist und deren andere Seite sich aus dem Stempel (200) heraus erstreckt, wobei die Luftleitung (300) umfasst:
eine erste Luftleitung (310), die mit dem ersten Luftkanal (211) verbunden ist; und eine zweite Luftleitung (320), die mit dem zweiten Luftkanal (212) verbunden ist.

2. Vorrichtung nach Anspruch 1, wobei mindestens eines von einem Druckmessgerät oder einem Durchflussmesser in der Luftleitung (300) vorgesehen ist.

3. Vorrichtung nach Anspruch 1, wobei jede der ersten Luftleitung (310) und der zweiten Luftleitung (320) mit einem Öffnungs- und Schließventil versehen ist, das so konfiguriert ist, dass es die Luftbewegung steuert.

4. Verfahren zum Formen einer Beutelfolie (S) unter Verwendung der Vorrichtung nach einem der Ansprüche 1 bis 3, wobei das Verfahren umfasst:
einen ersten Schritt des Aufsetzens einer Beutelfolie (S) auf die Matrize (100), in der die Formausnehmung (110) ausgebildet ist;
einen zweiten Schritt des Fixierens einer Kante der Beutelfolie (S);
wobei das Verfahren **gekennzeichnet ist durch** einen dritten Schritt des Abwärtsbewegens des Stempels (200) auf eine vorbestimmte Höhe von einer Oberfläche der Beutelfolie (S) und des Reduzierens eines Drucks der Luftkanäle (210) im Stempel (200), um Fremdkörper von der Beutelfolie (S) anzusaugen, um die Fremdkörper zu entfernen;
einen vierten Schritt des Inkontaktbringens des Stempels (200) mit der Oberfläche der Beutelfolie (S) und des Reduzierens des Drucks der Luftkanäle (210); und
einen fünften Schritt des Abwärtsbewegens des Stempels (200), so dass er in engen Kontakt mit der Innenfläche der Formausnehmung (110) kommt, während ein druckloser Zustand der Luftkanäle (210) aufrechterhalten wird.

5. Verfahren nach Anspruch 4, wobei im dritten Schritt Luft durch den ersten Luftkanal (211) geblasen wird, der sich in der Nähe des Stempelkantenabschnitts (220) befindet, und ein Druck des zweiten Luftkanals (212) reduziert wird.

6. Verfahren nach Anspruch 4, wobei derr vierte Schritt ferner das Aufrechterhalten eines drucklosen Zustands für einen vorbestimmten Zeitraum umfasst, um das Vorhandensein von Rissen oder Nadellöchern in der Beutelfolie (S) zu bestimmen.

7. Verfahren nach Anspruch 6, wobei das Vorhandensein von Rissen oder Nadellöchern auf der Grundlage einer Druckänderung oder einer Durchflussmengenänderung bestimmt wird.

8. Verfahren nach Anspruch 4, ferner umfassend einen sechsten Schritt des Blasens von Luft durch die Luftkanäle (210) in eine Richtung zur Formausnehmung (110) hin, nachdem der Stempel (200) in engen Kontakt mit der Innenfläche der Formausnehmung (110) gekommen ist.

9. Verfahren nach Anspruch 8, wobei im sechsten Schritt ein Druck oder eine Durchflussmenge von Luft, die durch den ersten Luftkanal (211) geblasen wird, der sich in der Nähe der Kante des Stempels (200) befindet, so aufrechterhalten wird, dass er höher ist als ein Druck oder eine Durchflussmenge von Luft, die durch den zweiten Luftkanal (212) geblasen wird, der sich innerhalb des Stempels (200) befindet und vom ersten Luftkanal (211) nach innen beabstandet ist.

## Revendications

1. Dispositif de formation d'un boîtier de batterie secondaire de type poche, comprenant :
une matrice (100) ayant un évidement de formation (110) formé à l'intérieur de celle-ci et une partie de bord de matrice (120) ayant un rayon de courbure prédéterminé, la partie de bord de matrice (120) étant située le long d'un bord au niveau duquel une surface inférieure et une surface verticale de l'évidement de formation (110) se rejoignent ;
un poinçon (200) configuré pour être mis en contact étroit avec une surface intérieure de l'évidement de formation (110) tout en se déplaçant vers le haut et vers le bas au-dessus de la matrice (100) ;
et une unité de fixation de feuille de poche (400) configurée pour fixer un bord d'une feuille de poche (S) tout en se déplaçant vers le haut et vers le bas au-dessus de la matrice (100) ;
**caractérisé en ce que** le poinçon (200) présente une pluralité de canaux d'air (210) configurés pour souffler sélectivement de l'air extérieur dans une direction vers l'évidement de formation (110) et pour aspirer de l'air, dans lequel les canaux d'air (210) comprennent :
un premier canal d'air (211) situé à proximité d'une partie de bord de poinçon (220) joignant une surface inférieure du poinçon (200) faisant face à l'évidement de formation (110) et une surface verticale du poinçon (200) ;
et un second canal d'air (212) situé à l'intérieur du poinçon (200) perpendiculairement à la surface inférieure de l'évidement de formation (110) et espacé vers l'intérieur dans une direction radiale du premier canal d'air (211), dans lequel le premier canal d'air (211) est incliné de manière à faire face à la partie de bord de matrice (120) de l'évidement de formation (110) ;
et **en ce que** le dispositif comprend en outre un conduit d'air (300) ayant un côté connecté aux canaux d'air (210) et l'autre côté s'étendant hors du poinçon (200), dans lequel le conduit d'air (300) comprend :
un premier conduit d'air (310) connecté au premier canal d'air (211) ; et un second conduit d'air (320) connecté au second canal d'air (212).

2. Dispositif selon la revendication 1, dans lequel au moins l'un d'un manomètre ou d'un débitmètre est prévu dans le conduit d'air (300).

3. Dispositif selon la revendication 1, dans lequel chacun du premier conduit d'air (310) et du second conduit d'air (320) est pourvu d'une soupape d'ouverture et de fermeture configurée pour commander le mouvement de l'air.

4. Procédé de formation d'une feuille de poche (S) en utilisant le dispositif selon l'une quelconque des revendications 1 à 3, le procédé comprenant :
une première étape de mise en place d'une feuille de poche (S) sur la matrice (100) ayant l'évidement de formation (110) formé à l'intérieur de celle-ci ;
une deuxième étape de fixation d'un bord de la feuille de poche (S) ;
le procédé étant **caractérisé par** une troisième étape de déplacement vers le bas du poinçon (200) à une hauteur prédéterminée depuis une surface supérieure de la feuille de poche (S) et de réduction d'une pression des canaux d'air (210) dans le poinçon (200) pour aspirer des corps étrangers de la feuille de poche (S) afin d'éliminer les corps étrangers ;
une quatrième étape de mise en contact du poinçon (200) avec la surface supérieure de la feuille de poche (S) et de réduction de la pression des canaux d'air (210) ; et
une cinquième étape de déplacement vers le bas du poinçon (200) de manière à venir en contact étroit avec la surface intérieure de l'évidement de formation (110) tout en maintenant un état dépressurisé des canaux d'air (210).

5. Procédé selon la revendication 4, dans lequel, dans la troisième étape, de l'air est soufflé à travers le premier canal d'air (211) situé à proximité de la partie de bord de poinçon (220) et une pression du second canal d'air (212) est réduite.

6. Procédé selon la revendication 4, dans lequel la quatrième étape comprend en outre le maintien d'un état dépressurisé pendant une période de temps prédéterminée pour déterminer une présence de fissures ou de trous d'épingle dans la feuille de poche (S).

7. Procédé selon la revendication 6, dans lequel la présence de fissures ou de trous d'épingle est déterminée sur la base d'une variation de pression ou d'une variation de débit.

8. Procédé selon la revendication 4, comprenant en outre une sixième étape de soufflage d'air à travers les canaux d'air (210) dans une direction vers l'évidement de formation (110) après que le poinçon (200) est venu en contact étroit avec la surface intérieure de l'évidement de formation (110).

9. Procédé selon la revendication 8, dans lequel, dans la sixième étape, une pression ou un débit d'air soufflé à travers le premier canal d'air (211) situé à proximité du bord du poinçon (200) est maintenu de manière à être supérieur à une pression ou un débit d'air soufflé à travers le second canal d'air (212) situé à l'intérieur du poinçon (200) et espacé vers l'intérieur du premier canal d'air (211).
